(19) Europäisches Patentamt / European Patent Office / Office européen des brevets

(11) **EP 1 870 693 A1**

(12) **DEMANDE DE BREVET EUROPEEN**

(43) Date de publication:
**26.12.2007 Bulletin 2007/52**

(51) Int Cl.:
*G01N 11/14* [(2006.01)]

(21) Numéro de dépôt: **07109121.9**

(22) Date de dépôt: **29.05.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **22.06.2006 FR 0605740**

(71) Demandeurs:
• **Société de Technologie Michelin**
  **63000 Clermont-Ferrand (FR)**
• **Michelin Recherche et Technique S.A.**
  **1763 Granges-Paccot (CH)**

(72) Inventeurs:
• **Cottais, Frédéric**
  **63000, CLERMONT-FERRAND (FR)**
• **Monnereau, Patrice**
  **63350, CULHAT (FR)**
• **Meyer, Daniel**
  **63400, CHAMALIERES (FR)**

(74) Mandataire: **Lasson, Cédric Y. M. et al**
  **M. F. P. Michelin**
  **23, place des Carmes Dechaux**
  **SGD/LG/PI - F35 - Ladoux**
  **63040 Clermont-Ferrand Cedex 9 (FR)**

(54) **Rheometre orthogonal**

(57) Appareil de mesure des propriétés rhéologiques d'un matériau viscoélastique formé d'un plateau rotatif supérieur (10) et d'un plateau rotatif inférieur (20), aptes à enserrer les faces opposées d'un échantillon S du matériau à mesurer, les axes de rotation ($a_1$ $a_1'$ et $a_2$ $a_2'$) des dits plateaux étant disposés parallèlement entre eux dans une direction perpendiculaire au plan formé par les plateaux, et écartés l'un de l'autre d'une distance *d*, caractérisé en ce que l'appareil comprend deux moteurs indépendants (12, 22) aptes à entraîner respectivement le plateau supérieur (10) et le plateau inférieur (20) à une même vitesse de rotation ω sans générer de déphasage angulaire de rotation entre les deux plateaux.

Fig. 3

EP 1 870 693 A1

**Description**

L'invention concerne un dispositif de mesure des propriétés rhéologiques d'un échantillon de matériau viscoélastique tel que du caoutchouc.

Les propriétés viscoélastiques d'un matériau sont décrites par des grandeurs physiques telles que le module visqueux (G"), le module élastique (G'), ou encore par le rapport $\dfrac{G''}{G'} = Tg\delta$ qui est la tangente de l'angle de déphasage entre la contrainte et la déformation lorsque le matériau subit une contrainte sinusoïdale, et qui permet entre autre de caractériser les phénomènes de dissipation à l'intérieur du matériau.

Il existe une grande variété de moyens permettant de mesurer ces caractéristiques physiques. Les moyens les plus répandus sont des rhéomètres à oscillation dans lesquels l'échantillon à mesurer est enserré entre deux plateaux mobiles en rotation l'un par rapport à l'autre. La valeur des modules visqueux et élastique est obtenue par la mesure des efforts exercés par l'échantillon sur l'axe de rotation lorsque l'on fait osciller le plateau mobile d'une faible valeur angulaire. Ces moyens sont décrits à titre d'exemple dans les publications US 2 752 778 ou encore dans la publication WO 02/42739. Un autre de ces moyens, dont les principes physiques ont été décrits par Gent dans le Journal Apply of Physics (1960, 11, 165) ou par Maxwell et RP Chartoff dans la revue Trans. Soc. Rheol (1965, 9, 41) est connu sous l'appellation de rhéomètre orthogonal. Les lois physiques d'un tel rhéomètre ont été développées à titre d'exemple par C.W. Macosko et W.M. Davis dans le manuel consacré à la rhéomètrie intitulé Rheometry Acta (1974, 13, 814).

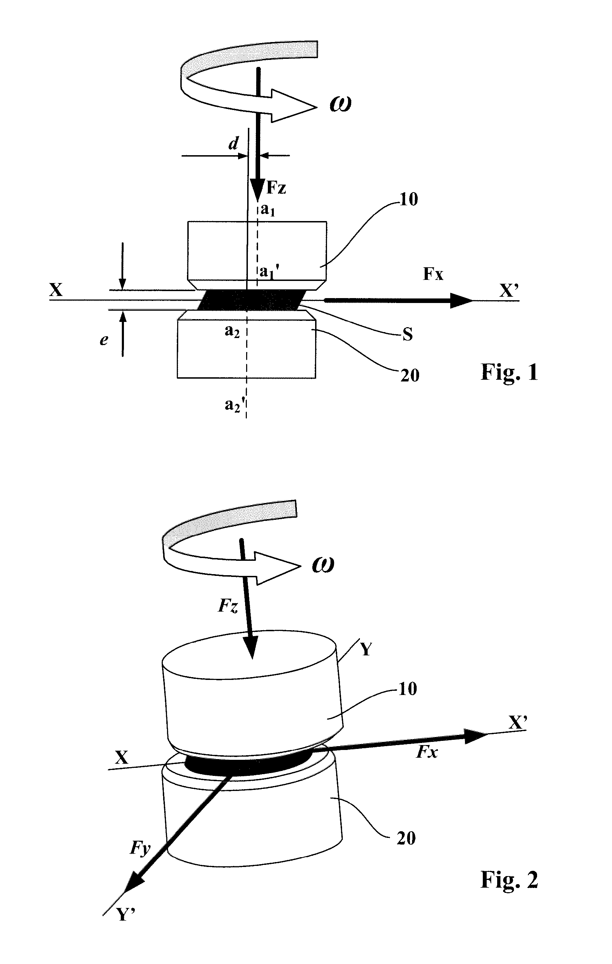

Un rhéomètre orthogonal, dont le schéma de principe est illustré aux figures 1 et 2, comprend deux plateaux rotatifs 10 et 20 dont les plans sont parallèles entre eux, et qui sont espacés d'une distance donnée $e$. L'échantillon E à mesurer, de section S, est placé entre les deux plateaux. Les axes de rotation des deux plateaux, respectivement $a_1\,a_1$' et $a_2\,a_2$', ne sont pas colinéaires, mais sont écartés d'une distance $d$ dans une direction XX' perpendiculaire auxdits axes de rotation et parallèle au plan des plateaux.

Le rhéomètre orthogonal de l'état de la technique décrit dans l'ouvrage de Maxwell et Chartoff cité ci-dessus comprend un moteur d'entraînement apte à entraîner en rotation le plateau supérieur à une vitesse constante ω, l'autre plateau étant maintenu par un arbre présentant une résistance à la friction la plus faible possible. Cet axe est lui-même entraîné en rotation par l'intermédiaire de l'échantillon E, à une vitesse de rotation égale à ω.

Les forces latérales exercées par l'échantillon sur le plateau inférieur dans la direction XX' et dans la direction YY', perpendiculaire à la direction XX' et aux axes de rotation $a_1\,a_1$' et $a_2\,a_2$', soit respectivement $Fx$ et $Fy$ sont mesurées à l'aide de moyens adaptés et permettent de calculer les valeurs de $G'$ et de $G''$ à une fréquence de sollicitation égale à ω.

En considérant la valeur $\gamma = \dfrac{d}{e}$ on obtient les résultats suivants :

$$G' = \frac{Fx}{S\gamma}$$

$$G'' = \frac{Fy}{S\gamma}$$

$$Tg\delta = \frac{Fy}{Fx}$$

Ces équations sont valables lorsque la valeur de γ est suffisamment faible, et lorsque l'on néglige les effets liés à l'inertie des plateaux.

On notera qu'un des avantages connu de ce type de rhéomètre est de permettre la mesure d'un échantillon de section de forme quelconque, dés lors que la valeur de cette section est connue au moment de la mesure.

La publication US 4 095 461 décrit un rhéomètre orthogonal construit sur ces principes, dans lequel le plateau supérieur est entraîné en rotation par un moteur monté sur un châssis fixe, et dans lequel le plateau inférieur est monté sur un arbre ayant une très faible résistance à la rotation, et sur lequel sont mesurées les forces latérales $Fx$ et $Fy.$

L'arbre inférieur est monté sur une plateforme mobile par rapport à un châssis fixe, de manière à permettre d'écarter l'axe du plateau inférieur par rapport à l'axe du plateau supérieur d'une valeur $d$ souhaitée dans la direction XX'.

Toutefois, le type de construction décrit dans les publications citées en référence ci-dessus, génère des contraintes préjudiciables à la qualité de la mesure. En effet, selon ce type de montage, l'échantillon entraîne en rotation le plateau inférieur, et un couple de frottement se crée entre la plateforme mobile et le support inférieur, lié au couple freineur engendré par les paliers du plateau inférieur.

De plus, la charge verticale Fz appliquée pour maintenir l'échantillon E entre les faces du plateau supérieur et inférieur, crée un couple de frottement qui se répercute dans l'échantillon E qui subit alors une contrainte parasite en torsion. Il en résulte une modification de la valeur des forces *Fx et Fy* qui prend la forme d'un signal alternatif sinusoïdal (de même fréquence que la fréquence de rotation ω). L'analyse du signal de mesure nécessite alors l'utilisation de capteurs à très haute bande passante, d'un moyen de filtrage et d'un logiciel de traitement de données adapté.

L'invention a pour objet d'apporter une solution à ces problèmes en permettant de supprimer les effets liés à l'inertie des plateaux et au couple de frottement, de manière à améliorer la précision de la mesure des forces latérales et le calcul de la valeur des paramètres *G'et G''* de l'échantillon.

L'appareil de mesure des propriétés rhéologiques d'un matériau selon l'invention est du type rhéomètre orthogonal. Il est formé d'un plateau rotatif supérieur et d'un plateau rotatif inférieur, aptes à enserrer les faces opposées d'un échantillon E du matériau à mesurer. Les axes de rotation des dits plateaux sont disposés parallèlement entre eux dans une direction perpendiculaire au plan formé par les plateaux et écartés l'un de l'autre d'une distance *d.* Cet appareil se caractérise en ce qu'il comprend deux moteurs indépendants aptes à entraîner respectivement le plateau supérieur et le plateau inférieur à une même vitesse de rotation ω, et sans engendrer de déphasage angulaire entre les deux plateaux.

Ce montage, comprenant deux moteurs, permet en effet de s'affranchir des inconvénients cités cidessus, en ce que chacun des plateaux est entraîné en rotation indépendamment l'un de l'autre. Les efforts parasites engendrés par l'entraînement du plateau inférieur par le plateau supérieur au travers du couple transmis par l'échantillon sont supprimés et les forces Fx et Fy mesurées sont plus proches des valeurs rhéologiques réelles.

La force de serrage Fz destinée à maintenir l'échantillon peut alors être varier selon les besoins de serrage de l'échantillon E, sans que cela ait un effet quelconque sur la rotation des plateaux et sur les forces *Fx et Fy.*

L'homme du métier comprendra que pour que la mesure soit valable, il convient que les deux plateaux tournent rigoureusement à la même vitesse. En d'autres termes il convient de faire en sorte qu'à chaque intervalle de temps les deux plateaux subissent une déviation angulaire identique afin d'éviter tout écart de rotation entre les deux plateaux, de manière à ne pas générer de couple de torsion à l'intérieur de l'échantillon.

Cette performance est atteinte par l'utilisation de moteurs du type pas à pas dans lesquels les signaux de commande sont absolument synchrones.

La description qui suit s'appuie sur les figures 1 à 4, et permet d'illustrer un mode de réalisation préférentiel de l'invention dans lesquelles,

- les figures 1 et 2 représentent, comme cela a déjà été signalé dans les paragraphes précédents, les schémas de principe d'un rhéomètre orthogonal,
- la figure 3 représente une vue en coupe d'un exemple de montage d'un rhéomètre selon l'invention,
- la figure 4 représente un schéma de principe des organes de pilotage et de mesure du rhéomètre orthogonal selon l'invention.

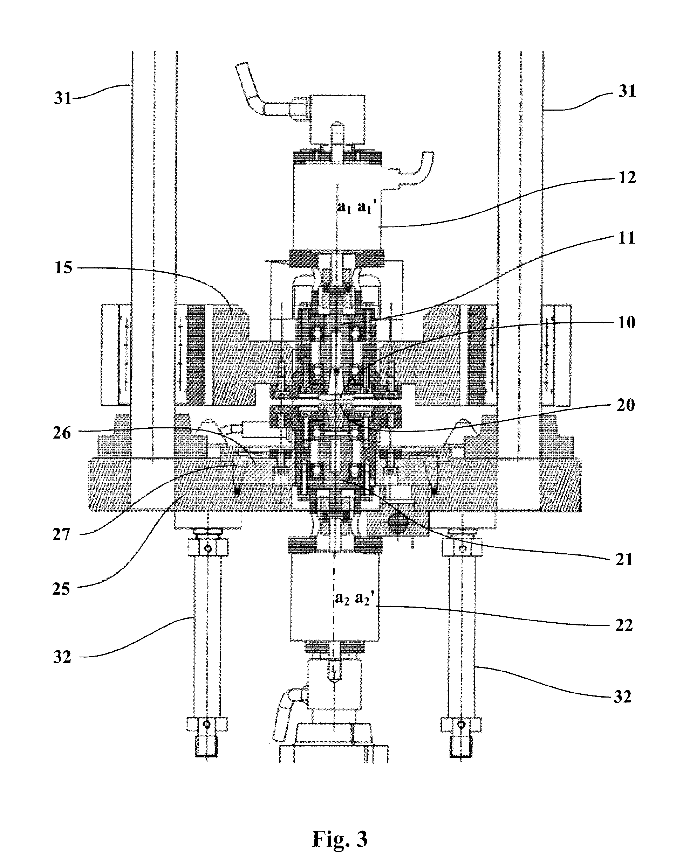

La figure 3 décrit un appareil de mesure selon l'invention dans lequel on distingue le plateau supérieur 10 et le plateau inférieur 20, qui sont disposés, dans des plans parallèles entre eux, et qui sont destinés à maintenir l'échantillon E de matériau à mesurer. Ces plateaux sont portés par des paliers rotatifs, respectivement 11 et 21 entraînés en rotation par des moteurs électriques, respectivement 12 et 22.

Il s'avère particulièrement avantageux d'aligner selon un même axe le rotor de sortie du moteur, le palier rotatif et l'axe de rotation du plateau, soit respectivement $a_1 a_1'$ pour l'ensemble supérieur, et $a_2 a_2$ pour l'ensemble inférieur.

Les paliers rotatifs 11 et 21 sont montés respectivement sur une plateforme supérieure 15 et une plateforme inférieure 26.

La plateforme supérieure 15, coulisse sur des montants 31, selon une direction verticale, perpendiculaire au plan formé par le plateau 10. En position relevée il est possible d'accéder aux plateaux pour introduire ou extraire un échantillon. En position de mesure, et en présence d'un échantillon, les plateaux sont rapprochés de manière à exercer une pression de maintien pré-établie sur les faces opposées de l'échantillon E, de sorte que les plateaux se positionnent à une distance *e* l'un de l'autre. On notera que cette distance *e*, qui correspond sensiblement à l'épaisseur de l'échantillon E, n'a pas besoin d'être calibrée et peut être évaluée par un moyen approprié au moment de la mesure.

En pratique on prendra soin d'éviter tout glissement des faces de l'échantillon par rapport aux plateaux en choisissant avec précaution l'usinage de la surface des plateaux en contact avec les faces opposées de l'échantillon. A titre d'exemple une taille de la surface des plateaux comprenant des rainures diamantées donne de bons résultats quel que soit le module des matériaux utilisés. Ces précautions permettent de réduire la valeur de la force *Fy* appliquée à l'échantillon par les plateaux selon la direction verticale.

La plateforme inférieure 26 est montée sur le châssis 25 de manière à pouvoir se déplacer horizontalement selon un axe XX' (non représenté). En déplaçant dans cette direction la plateforme inférieure 26 par rapport à la plateforme supérieure, il est possible de générer un écartement *d* entre les axes $a_1 a_1'$ et $a_2 a_2'$. Ce mouvement de translation peut être piloté par l'intermédiaire d'un générateur d'excentrique mécanique 27, ou encore par une table micrométrique. Le châssis 25 est lui-même monté sur des tirants 32 de manière à libérer l'espace inférieur nécessaire au logement du moteur et du palier inférieur.

Comme on l'a vu ci-dessus, le pilotage des moteurs est de grande importance de manière à s'assurer que les deux plateaux tournent rigoureusement à la même vitesse. La figure 5 permet de visualiser le schéma de principe d'un moyen de pilotage permettant d'obtenir cette performance.

Afin d'assurer une rotation parfaitement synchrone des moteurs 12 et 22, on choisira de préférence des moteurs dits pas à pas.

En effet ce type de technologie permet de fournir aux moteurs une commande simultanée sans qu'il soit nécessaire de mesurer un écart par rapport à une valeur de poursuite, ce qui aurait pour effet de générer un déphasage angulaire entre les deux plateaux.

L'alimentation de ces moteurs est assurée par des modules de commande C1 et C2 pilotés par des impulsions. Chaque impulsion fait opérer une rotation d'un pas déterminé à l'arbre de sortie du moteur. Pour assurer une bonne précision, on choisira des moteurs d'un type effectuant une rotation inférieure à 1° par pas ou par impulsion. En pratique de bons résultats ont été obtenus avec des moteurs effectuant 500 pas par tour. Un tour représentant 360° d'angle, cela équivaut à une rotation de 0,72° d'angle par impulsion.

Il est également possible par une alimentation combinée des bobines de commander le moteur au 1/10ème de pas, ce qui augment d'un facteur 10 la précision de pilotage.

De même, il est important que le deux plateaux puissent tourner ensemble de manière parfaitement synchrone de manière à éviter de provoquer une torsion parasite de l'échantillon. A cet effet on envoie les mêmes trains d'impulsions à chacun des modules de commande C1 et C2, en pilotant ces deux modules à l'aide d'un oscillateur O dont la fréquence d'oscillation est modulée en fonction de la vitesse de rotation ω désirée.

De cette manière il est possible de faire tourner les deux plateaux à une même vitesse en faisant en sorte que les deux plateaux accomplissent rigoureusement le même déplacement angulaire pendant la rotation. Ainsi, à chaque instant, l'écart total de rotation entre les deux plateaux est égal ou inférieur à 0,25° d'angle. Cela signifie que la déformation imposée en torsion par les plateaux à l'échantillon du fait d'un écart de rotation entre les deux plateaux n'excède à aucun moment un angle de 0,25°, ce qui peut être considéré comme négligeable. En pratique il est possible d'obtenir des valeurs inférieures à 0,2° d'angle.

Un problème particulier à résoudre concerne les configurations de démarrage et d'arrêt au cours desquelles les couples sont supérieurs aux couples nécessaires lorsque le régime est stabilisé. A cet effet, on choisira des moteurs dont la puissance nominale est de plusieurs ordres de grandeur supérieure à la puissance nécessaire pour mettre en rotation les plateaux lorsqu'un échantillon est disposé dans le rhéomètre pour y être mesuré.

En pratique on choisira des moteurs ayant une puissance supérieure à plus de 3 fois la puissance nécessaire pour faire tourner les plateaux en présence d'un échantillon. La vitesse ω de rotation des plateaux peut ainsi varier d'une position d'arrêt à une position de régime stabilisé sans générer d'écart angulaire entre les deux plateaux.

Il est également possible de maîtriser l'écart de rotation entre les deux plateaux pendant cette phase de démarrage en faisant en sorte que les montages mécaniques des deux plateaux soient sensiblement identiques. Ainsi en choisissant des moteurs 12 et 22 de même modèle et de masse sensiblement égales, des plateaux 10, 20 et des paliers 11 et 21 sensiblement identiques, il est possible d'obtenir des ensembles de masses et d'inertie très voisine. De cette manière toutes les anomalies de commande ont sensiblement le même effet sur chacun des plateaux.

La vitesse ω à laquelle on effectue la mesure est stabilisée au niveau représentatif des fréquences de sollicitation du matériau. En pratique, il est possible d'effectuer des mesures à des vitesses pouvant varier de quelques tours par minutes, jusqu'à 2500 T/min voire 3000 T/min, dans le cas de matériaux sollicités à très haute fréquence.

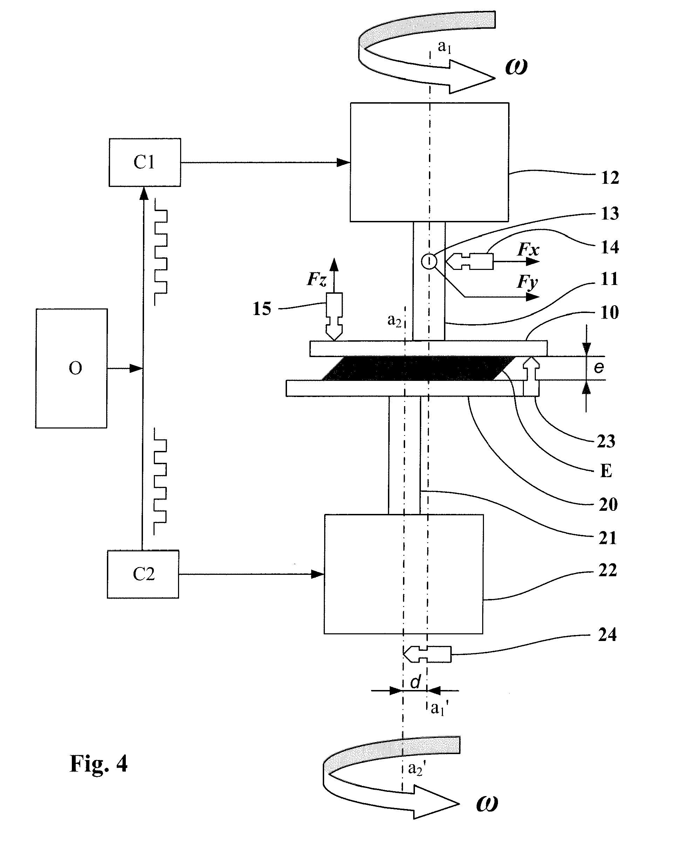

Comme cela est illustré sur la figure 4, un des axes est instrumenté pour recevoir les moyens de mesure des forces Fx et Fy générées par l'échantillon en réaction aux déformations imposées qu'il subit. Ces moyens de mesure sont en règle générale des jauges de contraintes. La disposition des moyens de mesure peut se faire indifféremment sur l'axe du plateau supérieur ou du plateau inférieur.

Il est également possible de munir un des plateaux d'une jauge permettant d'estimer la force appliquée sur l'échantillon selon la direction verticale et qui correspond à la force de serrage nécessaire pour maintenir ledit échantillon pendant la mesure.

La connaissances des valeurs des paramètres $e$ et $d$ s'obtient au moment de la mesure à l'aides d'un moyen (23) permettant d'évaluer la distance entre les deux plateaux, et d'un moyen (24) permettant d'évaluer l'écartement entre les axes $a_1$ $a_1'$ et $a_2$ $a_2'$.

On dispose ainsi de la valeur des paramètres $e$ et $d$ nécessaires au calcul de la valeur γ. En pratique, selon l'épaisseur $e$ de l'échantillon E, on ajuste la valeur $d$ de l'écartement entre les axes pour obtenir une valeur

du rapport $\gamma = \dfrac{d}{e}$ suffisamment faible.

La détermination des valeurs de G' et de G" se fait par calcul à l'aide d'algorithmes et de moyens connus ne faisant pas l'objet de la présente description.

La préparation de l'échantillon doit se faire avec soin. Il est important en effet que l'échantillon E ait une épaisseur constante sur l'ensemble de sa section. La valeur de la section S de l'échantillon peut être déterminée avec précision à l'aide d'une caméra numérique.

Compte tenu de la précision de mesure obtenue avec un rhéomètre selon l'invention, il est ainsi possible de mesurer des échantillons ne faisant que quelques dixièmes de mm d'épaisseur et dont la forme de la section S et l'épaisseur n'ont pas besoin d'être pré calibrées.

De même, lorsque l'on cherche à analyser des matériau viscoélastiques tels que des caoutchoucs il devient possible de faire des mesures sur le matériau non vulcanisé sans que ce dernier ne se déforme sous les effets de sa forte plasticité en raison de la faible force de maintien nécessaire, et de l'extrême rapidité de la mesure. En effet, quelques tours peuvent suffire pour obtenir des valeurs significatives de la valeur des modules élastiques et visqueux du matériau.

## Revendications

1. Appareil de mesure des propriétés rhéologiques d'un matériau viscoélastique formé d'un plateau rotatif supérieur (10) et d'un plateau rotatif inférieur (20), aptes à enserrer les faces opposées d'un échantillon E du matériau à mesurer, les axes de rotation ($a_1$ $a_1$' et $a_2$ $a_2$') des dits plateaux étant disposés parallèlement entre eux dans une direction perpendiculaire au plan formé par les plateaux, et écartés l'un de l'autre d'une distance $d$, **caractérisé en ce que** l'appareil comprend deux moteurs indépendants (12, 22) aptes à entraîner respectivement le plateau supérieur (10) et le plateau inférieur (20) à une même vitesse de rotation $\omega$, sans engendrer de déphasage angulaire entre les deux plateaux

2. Appareil de mesure selon la revendication 1 dans lequel les moteurs (12, 22) sont des moteurs du type pas à pas.

3. Appareil de mesure selon la revendication 2 dans lequel les modules de commande (C1, C2) font effectuer aux plateaux (10, 20) une rotation inférieure à 1° d'angle par pas.

4. Appareil de mesure selon la revendication 3 dans lequel les modules de commandes (C1, C2) des moteurs (10, 20) sont eux-mêmes pilotés par un même oscillateur (O) apte à envoyer les mêmes trains d'impulsions à chacun desdits modules.

5. Appareil de mesure selon l'une des revendications 1 à 4 dans lequel la puissance des moteurs (12, 22) est plus de 3 fois supérieure à la puissance nécessaire pour mettre les plateaux en rotation lorsqu'un échantillon S est placé sur ledit appareil pour y être mesuré.

6. Appareil de mesure selon l'une des revendications 1 à 5 dans lequel l'axe de rotation des moteurs pas à pas ($a_1$ $a_1$' et $a_2$ $a_2$') est confondu avec l'axe de rotation du plateau (10, 20) auquel il est relié.

7. Appareil de mesure selon l'une des revendications 1 à 6 dans lequel chacun des moteurs pas à pas (12, 22) est piloté par un module de commande (C1, C2) générant chacun un train d'impulsion, lesdits trains d'impulsion étant exactement synchrones, de sorte que l'écart total de rotation entre les deux plateaux (10, 20) est à tout moment inférieur à 0,25° d'angle.

8. Appareil de mesure selon l'une des revendications 1 à 7 dans lequel un des axes de rotation ($a_1$ $a_1$') est équipé de moyens (13, 14) aptes à apprécier les forces latérales $Fx$ et $Fy$, engendrées par l'échantillon S sur les plateaux (10, 20) selon deux directions XX' et YY' parallèles au plan des plateaux et perpendiculaires entre elles, en réaction aux déformations imposées au dit échantillon S, lorsque ledit échantillon S est placé sur ledit appareil pour y être mesuré.

9. Appareil de mesure selon la revendication 8 dans lequel les moyens (13, 14) aptes à apprécier les forces $Fx$ et $Fy$ sont des jauges de contrainte.

10. Appareil de mesure selon l'une des revendications 1 à 9 comprenant un moyen (23) apte à mesurer l'écartement $e$ entre les deux plateaux

11. Appareil de mesure selon l'une des revendications 1 à 10 dans lequel un des plateaux (20) est doté de moyens de translation (26, 27) aptes à faire varier l'écartement $d$ entre les axes ($a_1$ $a_1$' et $a_2$ $a_2$') des plateaux (10, 20).

12. Appareil de mesure selon la revendication 11 comprenant un moyen (24) apte à mesurer l'écartement $d$ entre les axes ($a_1$ $a_1$' et $a_2$ $a_2$') des plateaux (10, 20).

**Fig. 1**

**Fig. 2**

**Fig. 3**

Fig. 4

# EP 1 870 693 A1

**RAPPORT DE RECHERCHE EUROPEENNE**

Numéro de la demande

EP 07 10 9121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| P,X | EP 1 698 881 A (SCARABAEUS MESS UND PRODUKTION [DE]) 6 septembre 2006 (2006-09-06) * le document en entier * ----- | 1-12 | INV. G01N11/14 |
| A,D | US 4 095 461 A (STARITA JOSEPH M) 20 juin 1978 (1978-06-20) * abrégé * * colonne 1, ligne 6 - ligne 19 * * colonne 1, ligne 46 - colonne 2, ligne 58; revendication 1; figure 1 * ----- | 1-12 | |
| A | US 2 752 778 A (EDWARD ROBERTS JOHN ET AL) 3 juillet 1956 (1956-07-03) * le document en entier * ----- | 1-12 | |
| A | WO 02/42739 A (PRESCOTT INSTR LTD [GB]; PRESCOTT PHILIP [GB]; OURROSSOFF NICK [GB]) 30 mai 2002 (2002-05-30) * abrégé * * page 1, ligne 1 - ligne 6 * * page 2, ligne 7 - page 6, ligne 9 * * page 7, ligne 3 - page 9, ligne 5 * * page 9, ligne 21 - page 10, ligne 14; revendications 1-3,11; figure 1 * ----- | 1-12 | DOMAINES TECHNIQUES RECHERCHES (IPC) G01N |

Le présent rapport a été établi pour toutes les revendications

| Lieu de la recherche | Date d'achèvement de la recherche | Examinateur |
|---|---|---|
| Munich | 6 juillet 2007 | Weaver, Malika |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 10 9121

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-07-2007

| Document brevet cité au rapport de recherche | | Date de publication | Membre(s) de la famille de brevet(s) | | Date de publication |
|---|---|---|---|---|---|
| EP 1698881 | A | 06-09-2006 | AUCUN | | |
| US 4095461 | A | 20-06-1978 | AUCUN | | |
| US 2752778 | A | 03-07-1956 | GB | 747267 A | 28-03-1956 |
| WO 0242739 | A | 30-05-2002 | AU | 1255802 A | 03-06-2002 |
| | | | CA | 2427208 A1 | 30-05-2002 |
| | | | EP | 1336087 A2 | 20-08-2003 |
| | | | JP | 2004522144 T | 22-07-2004 |
| | | | US | 2003183016 A1 | 02-10-2003 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2752778 A
- WO 0242739 A

- US 4095461 A

**Littérature non-brevet citée dans la description**

- **GENT.** *Journal Apply of Physics,* 1960, vol. 11, 165
- **MAXWELL ; RP CHARTOFF.** *la revue Trans. Soc. Rheol,* 1965, vol. 9, 41

- **C.W. MACOSKO ; W.M. DAVIS.** *le manuel consacré à la rhéomètrie intitulé Rheometry Acta,* 1974, vol. 13, 814